# EUROPEAN PATENT APPLICATION

(11) **EP 2 680 206 A2**
(43) Date of publication of application: **01.01.2014**
(21) Application number: 11859585.9
(22) Date of filing: 20.12.2011
(51) Int. Cl.: G06Q 20/40, G06Q 20/16, H04W 4/02

(54) **SECURE PAYMENT SYSTEM USING A MOBILE PHONE, AND PAYMENT METHOD USING SAME**

(30) Priority: 27.02.2011 KR 20110017483
(71) Applicant: Park, Gui Sug, Seoul 139-220 (KR)
(72) Inventor: Park, Gui Sug, Seoul 139-220 (KR)
(74) Representative: Becker Kurig Straus
(86) International application number: PCT/KR2011/009815
(87) International publication number: WO 2012/115341

(57) **Abstract**

The present invention relates to a secure payment system and method using a mobile phone, wherein a purchaser makes payments using various credit cards and a seller confirms the payments instantly through a payment-receiving terminal, and more particularly, to a secure payment system and method using a mobile phone, wherein: a purchaser accesses a payment system using the mobile phone having a card registered therein and inputs and transmits seller information, a payment, and a password; a payment system recognizes and stores the inputs and extracts necessary information with a view to transmitting same to a credit-card company and a financial institution; and, if approval is granted by the credit-card company and financial institution, an approval number is automatically inputted in a process list of the payment system, and then a short message service (SMS) is simultaneously provided to the mobile phones of the purchaser and of the seller and to a payment-receiving terminal of the seller for payment confirmation.

## Description

### Technical Field

This invention relates to a secure payment system using a mobile phone and a method by using the same, wherein people who have to pay for their purchases (hereinafter, it will be referred to as the 'purchaser') shall fulfill payments for purchases to a payment recipient (hereinafter, it will be referred to as the 'seller') such as TV home shopping companies, shopping mall companies, a restaurant, a delivery service provider by using various credit-cards and cash cards (hereinafter, it will be referred to as the 'cards') via a mobile phone, and then the seller can confirm immediately that payments by using a mobile phone, a computer, a PDA and so on (hereafter, they will be collectively referred to as 'payment-receiving terminal'). More particularly, this invention relates to a secure payment system using a mobile phone and a method by using the same, wherein a purchaser accesses to the payment system via a mobile phone having a card registered therein and then he or she shall input and transmits information of the seller, a payment amount and a password, and then the payment system recognizes and stores the inputs and extracts necessary information with a view to transmitting same to a credit-card company and a financial institution, and then if an approval is granted by the credit-card company and the financial institution, an approval number is automatically inputted in a process list of the payment system, and then a short message service (SMS) is simultaneously provided to the mobile phones of the purchaser and of the seller and to a payment-receiving terminal of the seller for payment confirmation.

### Background Art

In recent years, due to the development of the IT industry and the communication technology, many varieties of mobile sorts and features are becoming very much. The mobile phone may be considered as a portable communication device essential for the modern people, and credit-card companies and finance companies are pursuing competitively the introduction of a mobile card which makes it possible to simultaneously use the credit-card features and the mobile phone functions by mounting integrated circuit (IC) chips on the mobile phone.

In particular, some credit-card companies and finance companies sold mobile cards in the market, but, it is necessary to have a terminal for general card systems, which is capable of reading personal information stored in a mobile card of a mobile phone within 10cm distance and then sending it to a credit-card company and a financial institution. This terminal may lead to significant cost and time consuming for installing it. Since the terminal may extract and recognize purchaser's information, personal information of the purchaser is likely to be leaked so that it is difficult to maintain the security of the purchaser's information. If a user lost his or her mobile phone or uses a mobile phone for an improper purpose, a lot of problems can happen.

Since the mobile card mounted in the mobile phone cannot be used in some locations where a payment-receiving terminal is not provided thereto such as a restaurant, a boutique, a dry cleaner, traditional markets, a TV home shopping mall and a general shopping mall, a taxi, and delivery industries (such as food delivery service, flower delivery service, etc.), the use of mobile cards may be restricted.

### Disclosure of Invention

In consideration of the above-mentioned disadvantages or inconveniences of the conventional techniques, an object of the present invention is to provide a secure payment system using a mobile phone and a method by using the same, wherein people who have to pay for their purchases store information of credit-card(cash card) via their possession mobile phone in the secure payment system, and then they shall input and transmits information(franchise number + dependent number) of a seller who receive payment under the state that they are connected with the secure payment system by using their possession mobile phone, and then they request to verify and to approve for payment information(purchase history, price), and then the payment system recognizes and stores the inputs and extracts necessary information with a view to transmitting same to a credit-card company and a financial institution, and then if an approval is granted by the credit-card company and the financial institution, an approval result is automatically provided to the mobile phone of the purchaser and is simultaneously provided to the mobile phone of the seller in real-time via a mobile phone, a computer, a PDA and so on.

Another object of the present invention to provide a secure payment system using a mobile phone and a method by using the same, which is capable of making the purchaser recognize information of the seller without providing the seller with information of the purchaser and of making the purchaser send necessary information to a credit-card company and a financial institution in order to ensure payment, whereby it can essentially block the exposure of the purchaser's information by switching the purchaser into the seller, which is an information provider for payment, which is capable of minimizing the cost and waste of time because the seller does not require a separate payment terminal installed, and which it is possible to spread the mobile card in a short time because most of the seller and the purchaser can use.

In order to achieve these objects, the present invention provides a secure payment system of the type having a mobile phone of a user who has to pay for his or her purchase; credit-card company and financial institution servers which are configured to maintain an account of available credit for the user of the mobile phone, and for generating an authorization to issue credit upon request if there is available credit in the account associated with the mobile phone equal to or greater than the requested credit; and a payment-receiving terminal configured to receive authorization to issue credit in real time, in which the secure payment system serves as a go-between in transmission of all information among the purchaser's mobile phone, the credit-card company and financial institution servers, and the payment-receiving terminal; provides the purchaser's mobile phone and the payment-receiving terminal with a screen required for payments, respectively; and encodes and stores all information required for payments, wherein the improvement comprises:
the secure payment system stores and administrates information of the purchaser to be inputted through the purchaser's mobile phone, information of a seller to be inputted through the payment-receiving terminal, device information of the purchaser's mobile phone and the payment-receiving terminal, and password information of the purchaser and the seller, while running an information management process;
the secure payment system makes seller's product information to be outputted on a phone page of the purchaser's mobile phone when the purchaser's mobile phone accesses to the secure payment system on the basis of the seller's information of the payment-receiving terminal, while running a customer management process;
the secure payment system extracts card information such as card number and expiration date from the information management process according to a request for approving a payment transmitted from the purchaser's mobile phone, and then sends that information to the credit-card company and the financial institution servers, and then receives authorization to issue credit and stores it, and then inputs a payment approval number into process lines of a phone and home page process and a SMS sending process, while running the payment executing process;
the secure payment system automatically sends the purchaser's information and the seller's information to the purchaser's mobile phone and the payment-receiving terminal with a character, while running the SMS sending process;
the secure payment system outputs payment fulfill circumstances such as required information, purchases, payment amount and so on to the phone page or the home page, while a payment is executed in the secure payment system by using the purchaser's mobile phone and the payment-receiving terminal, in the phone and home page process;
the secure payment system perceives positional coordinates of the purchaser's mobile phone when the purchaser's mobile phone accesses to the secure payment system, and then it compares the perceived positional coordinates with same area positional coordinates by matching them together, and thereafter it makes the phone page of the purchaser's mobile phone display a plurality of franchise stores existing in a region within a predetermined radius, while running the positional information process;
the secure payment system makes all of information to be sent or received among the purchaser's mobile phone, the credit-card company and the financial institution servers and the payment-receiving terminal through the public telecommunication network of the mobile and the internet, while running a data sending process; and
a franchise number, that is the seller's information, is provided so that the secure payment system perceives the purchaser's mobile phone and the franchise number of the seller and then it shall fulfill payments for purchases.

The payment-receiving terminal may be selected from the group of a mobile phone, a computer, a PDA, a POS computer and a navigation device, which are internet-enabled devices.

The payment-receiving terminal registered in the secure payment system is provided with a franchise store information chip of which a franchise number and a dependent number are stored therein, and the purchaser's mobile phone is provided with a payment information recognition chip is installed therein so that it may be communicated with the franchise store information chip in close proximity to each other and it can read information related to the franchise number and the dependent number of the seller.

The secure payment system extracts and stores a serial number of the purchaser's mobile phone, and a serial number of any one payment-receiving terminal selected from the group of a mobile phone, a computer, a PDA, a POS computer and a navigation device of the seller, while running the purchaser's mobile card temporary authorization process and the seller authentication requesting process.

Furthermore, the present invention provides a payment method by using a secure payment system of the type having a mobile phone of a user who has to pay for his or her purchase; credit-card company and financial institution servers which are configured to maintain an account of available credit for the user of the mobile phone, and for generating an authorization to issue credit upon request if there is available credit in the account associated with the mobile phone equal to or greater than the requested credit; and a payment-receiving terminal configured to receive authorization to issue credit in real time; in which the secure payment system serves as a go-between in transmission of all information among the purchaser's mobile phone, the credit-card company and financial institution servers, and the payment-receiving terminal; provides the purchaser's mobile phone and the payment-receiving terminal with a screen required for payments, respectively; and encodes and stores all information required for payments, characterized in that it comprises the steps of:
performing a purchaser registration process a purchaser so as to obtain an approval to be granted by the credit-card company and financial institution servers when the purchaser's mobile phone accesses to the secure payment system;
performing a seller registration process so as to obtain an approval to be granted by the credit-card company and financial institution servers when the purchaser's mobile phone accesses to the secure payment system;
performing a payment system connection process to a home page of the secure payment system by using the purchaser's mobile phone so as to fulfill payments for purchases after completing the purchaser registration process and the seller registration process;
performing an information entering process, wherein after completed having performing of the payment system connection process, a screen for requesting input of the purchaser's information, the seller's information and information related to the payment method is displayed on the phone page of the purchaser's mobile phone, then the purchaser sends those information;
performing a purchaser verification process, wherein after completed having performing of the information entering process, the secure payment system compares and analyzes the purchaser's information and the seller goods information, and if all of information was consistent with the purchaser's information, the secure payment system makes a screen for requesting input of billing password and payment details to be displayed on the phone page of the purchaser's mobile phone;
performing a card approval process, wherein after completed having performing of the purchaser verification process, the purchaser inputs a payment method, payment information and a payment password so as to request for approving a payment, then the secure payment system judges whether the request for approval was received or not, if the request for approval was received, the secure payment system request approval of the settlement price to the credit-card company and financial institution servers after extracting and coding the payment information, the card number of the purchaser, and the expiration date of the card, and then the credit-card company and financial institution servers send the results of the approval of the settlement price to the secure payment system; and
performing a payment completion process, wherein after completed having performing of the card approval process, if a card authorization information is transmitted from the credit-card company and financial institution servers to the secure payment system, then the secure payment system automatically inputs and stores in process lists of the information management process, the customer management process, the payment executing process, the SMS sending process, the phone and home page process, the positional information process, the data transfer process.

The dependent number may be selected from the group of number of restaurant seat, number of karaoke room, number of the hotel's room, number of product selling in shopping mall and home shopping, and number of vehicles.

The secure payment system can make the phone page of the purchaser's mobile phone display a plurality of franchise stores existing in a region within a predetermined radius due to the positional information process, while running payment system connection process.

The purchaser registration process comprises the steps of:
performing a purchaser's mobile card install process, wherein if a user accesses to the payment system by using the purchaser's mobile phone and then he or she gets down a program required to the secure payment system, a screen for entering a card information and a personal information of the purchaser in the secure payment system may be displayed on the phone page of the purchaser's mobile phone;
performing a purchaser's mobile card certification request process, wherein after completed having performing of the purchaser's mobile card install process, if a purchaser inputs card information and purchaser's information, then the secure payment system receives that information and requests the registration of the purchaser's mobile phone and the purchaser's mobile card to the credit-card company and financial institution servers;
performing a purchaser's mobile card temporary authorization process the purchaser's mobile card, wherein after completed having performing of the purchaser's mobile card identification request process, if the secure payment system receives information related to the completion of the card registration from the credit-card company and financial institution servers, it performs a temporary authentication step and stores that information;
performing a purchaser's mobile card authorization preparing process the purchaser's mobile card authorization after completed having performing of purchaser's mobile card temporary authorization process, wherein a screen for entering a password to be used when billing and an emergency password to be used in the event of an emergency is displayed on the phone page of the purchaser's mobile phone; and
performing a purchaser's mobile card final authorization process, wherein after completed having performing of purchaser's mobile card authorization preparing process, if the purchaser inputs the password to be used when billing into the screen and then sends that information to the secure payment system, the secure payment system makes a simulated payment fulfill screen to be displayed on the phone page of the purchaser's mobile phone, and if the simulated payments was properly made, then the secure payment system stores information related to the connection and payment password and thereafter performs the final certification procedure, and then the secure payment system sends character information to purchaser's mobile phone so as to notify the completion of the purchaser registration procedure.

The seller registration process comprises the steps of:
performing a payment system seller install process, wherein a seller can access to the secure payment system through the payment-receiving terminal and download and install any necessary program, and wherein a screen for entering information of the seller may be displayed on the phone page the payment-receiving terminal;
performing a seller authentication requesting process, wherein after having completed performing of the payment system seller install process, if the seller inputs seller's information of the payment-receiving terminal, the secure payment system recognizes the fact that information entered and then stores that seller's information, and then the secure payment system requests a registration of member store in the credit-card company and financial institution servers; and
performing a seller authentication process, wherein after completed having performing of the seller authentication requesting process, if the secure payment system receives information indicating that the registration of franchise store is completed, then the seller enters information of the payment-receiving terminal and sends that information to the secure payment system, then the secure payment system recognizes the fact that information entered and it gives franchise number to the payment-receiving terminal of the seller and then fulfills the final authentication procedure, at the same time, it sends character information(SMS) indicating the completion of franchise store registration to the payment-receiving terminal.

The secure payment system extracts and stores a serial number of the purchaser's mobile phone, and a serial number of any one payment-receiving terminal selected from the group of a mobile phone, a computer, a PDA, a POS computer and a navigation device of the seller, while running the purchaser's mobile card temporary authorization process and the seller authentication requesting process.

In the purchaser's mobile card final authorization process of the purchaser registration process, if a purchaser sets his or her ID, a password to be used to access the secure payment system is set to six-digit number, then an emergency password can be automatically set as new six-digit number by displacing preceding two numbers in this six-digit number to rear two-digit number sites. Even if a user is placed in the event of an emergency such as imprisonment or kidnapping so that he or she is impossible to call, the user can request for emergency assistance by inputting and sending ID and the emergency password to the secure payments system. Then, the secure payment system automatically sends a signal for calling an appropriate emergency service to the crime report No. 112, which is the connection to police, so that effective crime prevention can be achieved.

Furthermore, the present invention provides a payment method by using a secure payment system of the type having a mobile phone of a user who has to pay for his or her purchase; credit-card company and financial institution servers which are configured to maintain an account of available credit for the user of the mobile phone; a payment-receiving terminal configured to receive authorization to issue credit in real time; a franchise store information chip having a franchise number and a dependent number, which is located on a table of a franchise store; and a payment information recognition chip installed in the purchaser's mobile phone, which can read the seller's information after performing the near- field communication with the franchise store information chip; in which the secure payment system serves as a go-between in transmission of all information among the purchaser's mobile phone, the credit-card company and financial institution servers, and the payment-receiving terminal; provides the purchaser's mobile phone and the payment-receiving terminal with a screen required for payments, respectively; characterized in that it comprises the steps of:
performing a close communication, wherein when a purchaser accesses to the secure payment system through the purchaser's mobile phone, the secure payment system can recognize a close communication between the payment information recognition chip and the franchise store information chip; and
performing an automatic connection and certification, wherein after completed having performing of the close communication process, the secure payment system extracts the franchise number and the dependent number of the seller stored in the franchise store information chip, then it allows the seller's information, which is corresponds to the franchise number and the dependent number, to be displayed on a phone page of the purchaser's mobile phone, and then it requests for approving a payment;
wherein after completed having performing of the automatic connection and certification process, the card approval process, the payment completion process and the seller payment amount sending process may be further performed in sequence.

In the secure payment system using a mobile phone and a method by using the same according to the present invention, a purchaser makes payments using various credit cards and a seller confirms the payments instantly through a payment-receiving terminal such as a mobile phone, a computer, PDA, and a purchaser accesses a payment system using the mobile phone having a card registered therein and inputs and transmits seller information, a payment, and a password. Accordingly, all of card companies and financial companies can utilize the secure payment system without exposing the card information of the purchaser.

In the conventional card payment system, the seller may fulfill the credit card payment process after receiving the credit card from the purchaser. In contrast, according to the present invention, the purchaser can fulfill the credit card payment process after receiving seller's information such as the franchise number and the dependent number from the seller.

The secure payment system according to the present invention can be used in all types of business including a restaurant, a tailor shop, a delivery business, conventional market and so on without using mobile payment terminal. Since anyone can conveniently pay purchase expense by using a mobile phone, a computer, or PDA, which are internet-enabled devices, it can reduce the seller's fixed costs.

If a customer pays purchase expense by using the payment system according to the present invention, he or she does not need to carry the credit-card for payment. Also, even if a user is placed in the event of an emergency such as imprisonment or kidnapping so that he or she is impossible to call, the user can request for emergency assistance by inputting and sending ID and the emergency password to the secure payments system. Then, the secure payment system automatically sends a signal for calling an appropriate emergency service to the crime report No. 112, which is the connection to police, so that effective crime prevention can be achieved. Furthermore, while running the positional information process (16) according to the present invention, the secure payment system functions to quickly provide the purchaser with information related to franchisee of the seller on the basis of the fact that positional coordinates of the purchaser's mobile phone is the same as that of the payment-receiving terminal so as to enhance the convenience of payments. Furthermore, according to the present invention, a franchise store information chip which is a near-field communication chip and contains information of the seller including franchise number and the dependent number may be fixed and installed on a table of the franchise store, it can automatically ascertain the payment information by reading the seller's information including franchise number and the dependent number after performing the near-field communication with the franchise store information chip may be directly installed in the purchaser's mobile phone or be installed thereto with the aid of any secondary storage tool. As a result, there is no necessity for inputting information such as franchise number and dependent number of a seller who receives payment.

### Brief Description of the Drawings

FIG. 1 illustrates the concept of a secure payment process using a mobile phone according to the present invention.
FIG. 2 illustrates a process configuration of the secure payment system using the mobile phone according to the present invention.
FIG. 3A is a schematic view for showing a purchaser registration process in the secure payment system using the mobile phone according to the present invention.
FIG. 3B is a flow chart for showing the purchaser registration process in the secure payment system using the mobile phone according to the present invention.
FIG. 4A is a schematic view for showing a seller registration process in the secure payment system using the mobile phone according to the present invention.
FIG. 4B is a flow chart for showing the seller registration process in the secure payment system using the mobile phone according to the present invention.
FIG. 5A is a schematic view for showing a credit payment process in the secure payment system using the mobile phone according to the present invention.
FIG. 5B is a flow chart for showing the credit payment process in the secure payment system using a mobile phone according to the present invention.
FIG. 5C is a flow chart for a conditional payment process in the secure payment system using the mobile phone according to the present invention.
FIG. 6A illustrates an example for showing near field communications between a franchise store information chip located on a table of a franchise store and a mobile phone having a payment information recognition chip therein in the secure payment system using the mobile phone according to the present invention.
FIG. 6B is a flow chart for showing a payment process of the secure payment system using the mobile phone according to the present invention when the mobile phone having payment information recognition chip therein and the franchise store information chip located on the table of the franchise store as shown in FIG. 6A are close to each other.
FIG. 7A to 7I show screen displayed on a mobile phone during the payment process by using the secure payment system according to the present system.

### Best Mode for Carrying Out the Invention

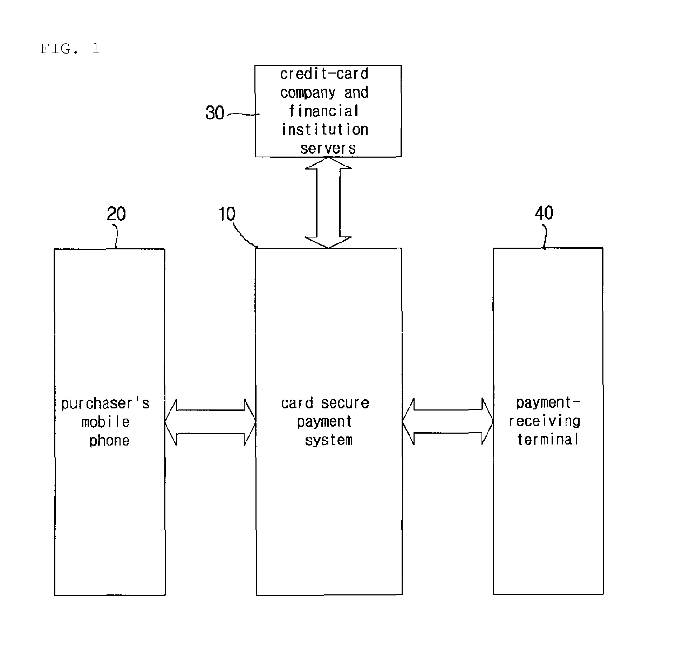

Herein below, a secure payment process using a mobile phone according to the present invention will be explained in detail with reference to the attached to the drawings FIGS. 1 to 6B.

At first, FIG. 1 illustrates the concept of a secure payment process using a mobile phone according to the present invention. In the secure payment process using the mobile phone according to the present invention, a purchaser can store information of a credit-card and/or a cash card in a secure payment system (10) via his or her possession mobile phone (20). The purchaser can perform a payment by using the purchaser's mobile phone (20) with the aid of information of a credit-card and/or a cash card of the purchaser stored in the secure payment system (10).

A seller can perform the franchise registration in the secure payment system (10) by using a payment-receiving terminal (40) such as a mobile, a compactor, PDA etc. and can ascertain immediately the results of payment approval request performed by using the purchaser's mobile (20) in the secure payment system (10). Servers of a credit-card company and a financial institution can approve the payment so as to settle a payment amount to the seller having the payment-receiving terminal (40) of the seller when a request for approving a payment is inputted into the secure payment system (10) by using the purchaser's mobile phone (20).

The secure payment system (10) can function of relaying all information required for payments among the purchaser's mobile phone (20), the payment-receiving terminal (40) of the seller and the credit-card company and the financial institution servers (30). Furthermore, the secure payment system (10) can function of providing the purchaser's mobile phone (20) and the payment-receiving terminal (40) with a screen required for payments. Furthermore, the secure payment system (10) can function of encoding and storing all information required for payments there between.

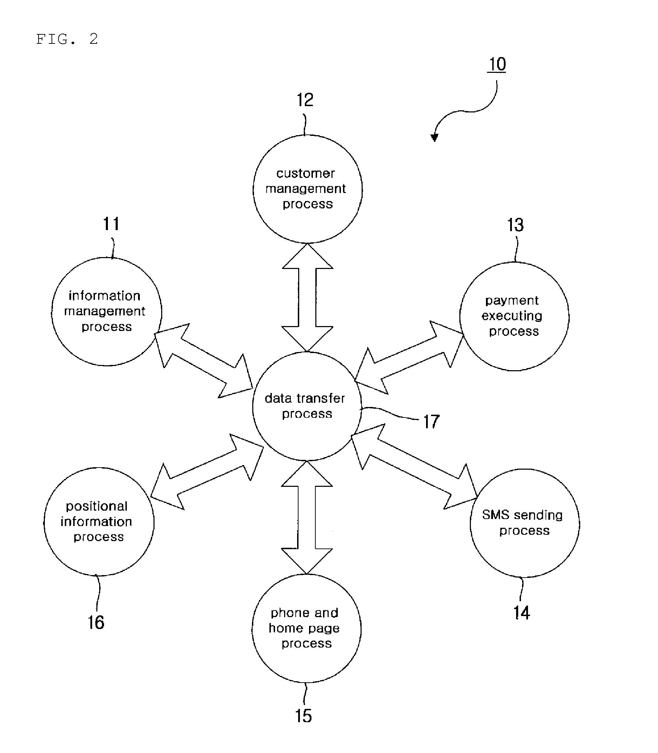

FIG. 2 illustrates a process configuration of the secure payment system using the mobile phone according to the present invention. The total process of the secure payment system (10) comprises an information management process (11), a customer management process (12), a payment executing process (13), a SMS sending process (14), a phone and home page process (15), a positional information process (16), and a data transfer process (17).

The information management process (11) comprises an input and output administration process for judging and storing information to be inputted to the purchaser's mobile phone (20) or the payment-receiving terminal (40); a device information process for extracting and storing a serial number of the payment-receiving terminal such as the mobile, the computer, the PDA etc.; a password information process for encoding and storing a user's information; and an analyzing and executing process for extracting and adding a necessary information after matching each process.

The customer management process (12) may store and maintain information of the purchaser's mobile phone (20) and the payment-receiving terminal (40). For this purpose, it is necessary to have a phone page or a home page, which may be automatically executed.

In other words, if the purchaser's mobile phone (20) gets on the secure payment system (10), the secure payment system (10) recognizes this fact and then automatically communicates with the credit-card company and the financial institution servers (30) while running the analyzing and executing process so that related information may be stored while running the information management process (11). Thereafter, the secure payment system (10) extracts the required information and then automatically input it in a process list of the phone page and the home page. At this time, the phone page of the purchaser's mobile phone (20) may be reply-outputted and simultaneously the required information may be outputted at the home pages of the purchaser's mobile phone (20) and the payment-receiving terminal (40).

While running the payment executing process (13), the secure payment system (10) extracts a necessary information from the information management process (11) and exchanges extracted information with the credit-card company and the financial institution servers (30), and then inputs extracted information into the purchaser's mobile phone (20) or the payment-receiving terminal (40), and then extracts the serial number of the terminal and then automatically store it in the information management process (11), and then automatically inputs the necessary information in process lines of the phone and home page process (15) and the SMS sending process (14). Thereby, the purchaser and the seller can ascertain required information through the purchaser's mobile phone (20) or the payment-receiving terminal (40) in real time.

While running the SMS sending process (14), the secure payment system (10) can automatically send a character information to the purchaser's mobile phone (20) and the payment-receiving terminal (40) so that it can make the purchaser and the seller ascertain the payment fulfill circumstances of the purchaser's mobile phone (20) and the payment-receiving terminal (40) in the secure payment system (10) in real time.

In the phone and home page process (15), the secure payment system (10) can output the payment fulfill circumstances such as required information, purchases, payment amount and so on to the screen, that is a phone page or a home page, while a payment is executed in the secure payment system by using the purchaser's mobile phone (20) and the payment-receiving terminal (40).

If the payment information is inputted and sent by using the purchaser's mobile phone (20), the secure payment system (10) automatically communicates with the credit-card company and the financial institution servers (30) on the basis of the payment information while running the analyzing and executing process so that it may be stored therein. The secure payment system (10) extracts the necessary information while running information management process (11) and then automatically inputs it to the process lines of the phone and home page process (15). At this time, the phone page illustrating the necessary information may be reply-outputted on the screen of the purchaser's mobile phone (20) and also the home page illustrating the necessary information may be reply-outputted on the screen of the payment-receiving terminal (40).

While running the positional information process (16), the secure payment system (10) functions to quickly provide the purchaser with information related to franchisee of the seller (16) on the basis of the fact that positional coordinates of the purchaser's mobile phone (20) is the same as that of the payment-receiving terminal (40) so as to enhance the convenience of payments.

In other words, the position of the payment-receiving terminal (40) of the seller, that is the franchise store, is constant and the position of the purchaser's mobile phone (20) changes. While running the analyzing and executing process, the secure payment system (10) perceives positional coordinates in which a purchaser accesses to the phone page of the purchaser's mobile phone (20) during the purchase or the search of goods, and then it compares the perceived positional coordinates with same area positional coordinates by matching them together. At this time, information of the payment-receiving terminal (40) is automatically displayed on the phone page.

Thus, if a purchaser accesses to the secure payment system (10) without inputting the number of franchise store to the purchaser's mobile phone (20), the positional information process (16) compares the perceived location of the purchaser with the positional coordinates of the same area. Then, positional coordinates, which are perceived by the analyzing and executing process, and information related to the adjacent franchise store are automatically displayed on the phone page of the purchaser's mobile phone (20). Then, the purchaser can select the target billing seller among the franchises automatically displayed on the phone page and then information required to payments is automatically displayed on the phone page of the purchaser's mobile phone (20). At this time, because the purchaser only inputs a settlement price to be paid, the payments can be easily performed.

In particular, when the payment-receiving terminal (40) using a computer of which POS program is equipped therewith (hereinafter, it will be referred to as the "POS computer") is associated with the secure payment system (10), it can ascertain information of the franchise store required to pay and products details and costs to be paid by giving a dependent number (for example, a table number of the restaurant, a number of delivery person for the delivery service, etc.) to the purchaser's mobile phone (20).

When a payment is made by using the positional information process (16) as described above, the franchise number comprises a state identification number 3-digit, a local identification number 4-digit and a personal identification number 4-digit(it can be changed) in order to reduce labor to enter information of the franchise store into the purchaser's mobile phone (20). At this time, the rear number 4-digit of the franchise number may be assigned to the same local region. If the purchaser inputs only the rear number 4-digit of the franchise number and the dependent number, the franchise information may be recognized by the positional information process (16) and the analyzing and executing process and then it is automatically inputted into the process lines of the payment system. Continuously it may be automatically displayed on the phone page of the mobile phone of the purchaser by the phone and home page process (15). Detailed explanation about the dependent number will be described later.

Meanwhile, the data transfer process (17) is a communication port which is capable of sending or receiving all of information to be exchanged among the purchaser's mobile phone (20), the credit-card company and the financial institution servers (30) and the payment-receiving terminal (40) in the secure payment system (10) through the public telecommunication network of the mobile and the internet.

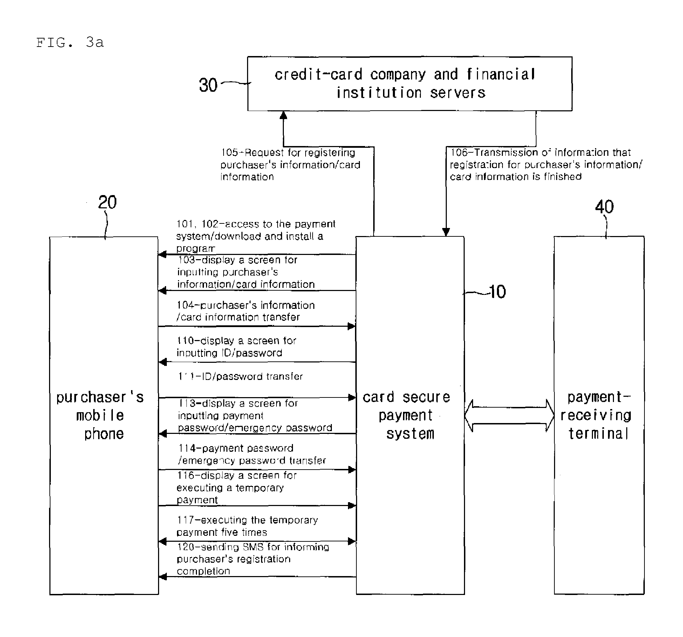

Herein below, the payment process of the secure payment system by using the mobile phone will be described with reference to the attached drawings FIGS. 3A to 6B. As described above, the secure payment system comprise the information management process (11), the customer management process (12), the payment executing process (13), the SMS sending process (14), the phone and home page process (15), the positional information process (16) and the data transfer process (17). The secure payment system (10) may be operated due to the cooperative operation among the purchaser's mobile phone (20), the credit-card company and financial institution servers (30) and the payment-receiving terminal (40).

At first, the payment process of the secure payment system using the mobile phone according to the present invention comprises a purchaser registration process (70) for requesting a certification to the secure payment system (10) through the purchaser's mobile phone (20), a seller registration process (90) for requesting a certification to the secure payment system (10) through the payment-receiving terminal (40) and for obtaining a franchise number, and a secure payment process (60) being proceed between the purchaser's mobile phone (20) and the payment-receiving terminal (40) after completed having performing of the purchaser registration process (70) and the seller registration process (90).

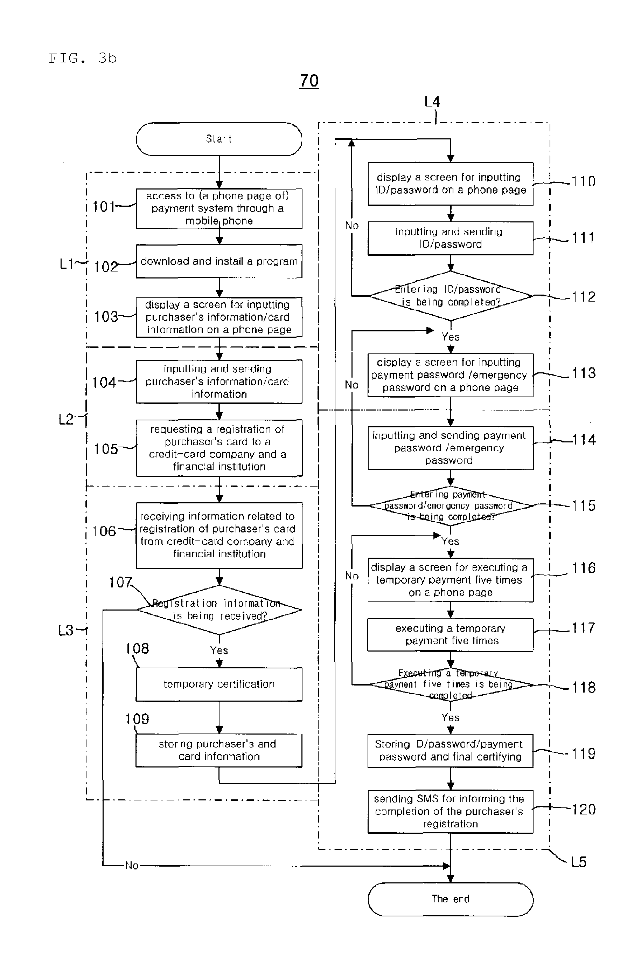

FIG. 3A is a schematic view for showing a purchaser registration process in the secure payment system (10) using the mobile phone according to the present invention, FIG. 3B is a flow chart for showing the purchaser registration process in the secure payment system using the mobile phone according to the present invention.

Herein below, the purchaser registration process (70) in the secure payment process using the mobile phone according to the present invention mobile will be explained in detail.

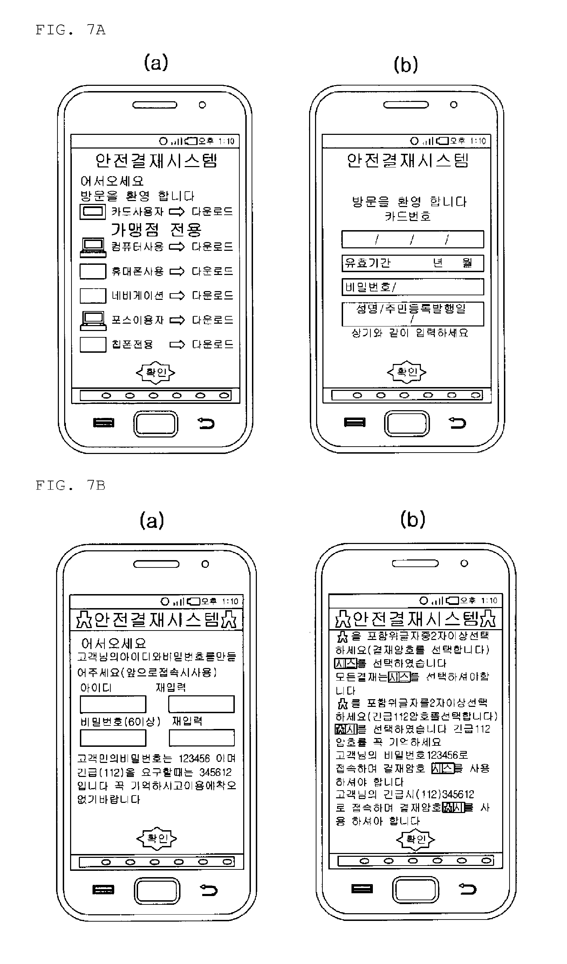

At first, as shown in FIGS. 3A and 3B, if a user accesses to the home page of the payment system by using the purchaser's mobile phone (20) (=step 101), a screen for getting down a program required to the secure payment system (10) will be displayed on the phone page as shown in screen (a) of FIG. 7A. If the user selects a card user check box displayed on the screen of the purchaser's mobile phone (20) and then can get down and install the necessary program (=step 102), a screen for entering a card information and a personal information of the purchaser will be displayed on the phone page as shown in screen (b) of FIG. 7A (=step 103). Thus, a purchaser's mobile card install process (=L1) is finished.

After completed having performing of the purchaser's mobile card install process (=L1), if the purchaser inputs card information such as card type, card number, expiration date, card password and purchaser's information such as name, identification issued date required in the secure payment system (10) displayed on the phone page and then this information is sent to the secure payment system (10) (=step 104), then the secure payment system (10) receives this information and requests the registration of the purchaser's mobile phone (20) and the purchaser's mobile card to the credit-card company and financial institution servers (30). Thus, a purchaser's mobile card identification request process (=L2) is finished.

After completed having performing of the purchaser's mobile card identification request process (=L2), the credit-card company and financial institution servers (30) compare and analyze personal information and card information of the purchaser's mobile phone (20), which are transmitted from the secure payment system (10). If all of the information is consistent with the comparison target and thereby the purchaser's card is turned out to be available, the credit-card company and financial institution servers (30) encode and save information of the purchaser's mobile phone (20) and the purchaser, and then it send purchaser's information and information related to the completion of the card registration to the secure payment system (10).

Accordingly, the secure payment system (10) receives purchaser's information and information related to the completion of the card registration from the credit-card company and financial institution servers (30) (=step 106). If the secure payment system (10) receives that information from the credit-card company and financial institution servers (30) (=step 107), then a temporary authentication step is performed (=step 108). Then, the secure payment system (10) extracts information of the purchaser's mobile phone (20) and card information such as card number, expiration date, card password, mobile phone number, serial number of mobile phone and then it stores that information in the information management process (11) (=step 109). Thus, a purchaser's mobile card authorization process (=L3) is finished.

The reason why the serial number of the purchaser's mobile phone (20) is extracted and stored in the information management process (11) is to make sure the real purchaser's mobile phone (20) in order to cope with the situation that the purchaser's mobile phone (20) might have been copied for criminal purposes.

After completed having performing of purchaser's mobile card temporary authorization process (=L3), a screen for entering ID and password to be used by the purchaser is displayed on the phone page of the purchaser's mobile phone (20) as shown in screen (a) of FIG. 7B (=step 110). If the purchaser creates and sends his or hers ID and password through the purchaser's mobile phone (20) (=step 111), the secure payment system (10) recognizes that information (=step 112), and thereby a screen for entering a password to be used when billing and an emergency password to be used in the event of an emergency is displayed on the phone page of the purchaser's mobile phone as shown in screen (b) of FIG. 7B. Thus, the purchaser's mobile card authorization preparing process (=L4) is finished.

After completed having performing of the purchaser's mobile card authorization preparing process (=L4), the purchaser inputs the password to be used when billing into the screen and then sends that information to the secure payment system (10) (=step 114). If the secure payment system (10) recognizes the input of the password to be used when billing (=step 115), a simulated payment fulfill screen is displayed on the phone page of the purchaser's mobile phone (20) in order to prevent the purchaser's mistakes (=step 116).

Whereupon, the purchaser performs simulated payments five times through the phone page of the purchaser's mobile phone (20)(=step 117). If the simulated payments was properly made five times (=step 118), then the secure payment system (10) stores ID, billing password, emergency password and thereafter performs the final certification procedure (=step 119). Continuously the secure payment system (10) sends character information (SMS) to purchaser's mobile phone (20) so as to notify the completion of the purchaser registration procedure. Thus, the purchaser registration process (=L5) is finished.

In the purchaser's mobile card authorization preparing process (=L4) of the total process for the purchaser registration (=70), ID and password of the purchaser may be set to at least six-digit number. Emergency ID and password to be used in the event of an emergency are automatically provided on the basis of the ID and the password set by the purchaser. Accordingly, even if a user is placed in the event of an emergency such as imprisonment or kidnapping so that he or she is impossible to call, the user can request for emergency assistance by using the secure payments system (10).

When the password to be used to access the secure payment system (10) is set to six-digit number "589626", an emergency password can be automatically set as "962658" by displacing preceding two numbers in this six-digit number "589626" to rear two-digit number sites. Then, the purchaser selects at least two letters among a predetermined phrase, for example "# 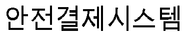 ", displayed at a front upper side of the phone page of the purchaser phone (20) (for convenience, let's assume that the purchaser selects " 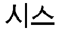 ") and thereafter he or she may set an emergency password by selecting at least two letters (for convenience, let's assume that the purchaser selects " 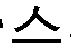 *#*").

In other words, if the purchaser accesses to the secure payment system (10) by inputting the password "589626" and then he or she requests for approval by inputting billing password " 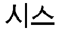 ", the secure payment system (10) judges that this purchaser's access is a normal access for requesting a normal payment. If the purchaser accesses to the secure payment system (10) by inputting the password "962658" and then he or she requests for approval by inputting the emergency password " 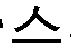 #", then the secure payment system (10) judges that the purchaser is in the midst of emergency situation. Then, the secure payment system (10) automatically sends a signal for calling an appropriate emergency service to the crime report No. 112, which is the connection to police, so that effective crime prevention can be achieved.

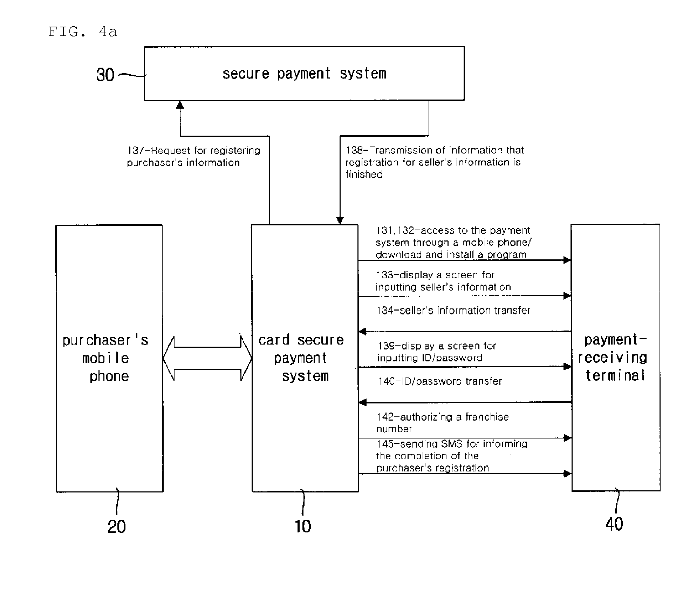

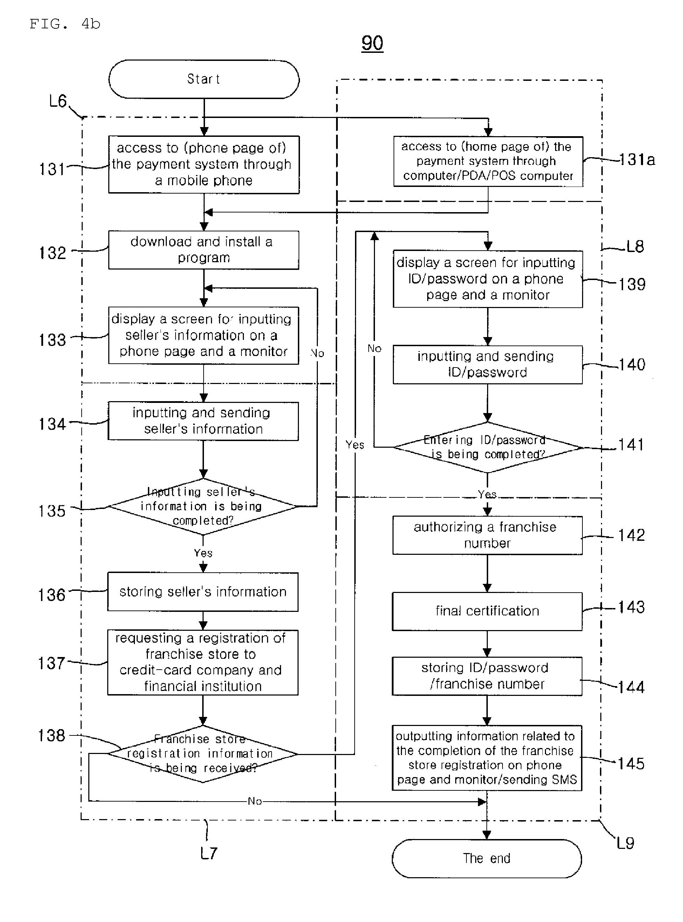

FIG. 4A is a schematic view for showing a seller registration process (=90) through the payment-receiving terminal (40) of the seller in the secure payment system (10) using the mobile phone according to the present invention, FIG. 4B is a flow chart for showing the seller registration process in the secure payment system (10) using the mobile phone according to the present invention.

Herein below, the seller registration process (=90) in the secure payment process (10) by using the mobile phone according to the present invention will be described with reference to the attached drawings FIGS. 4A and 4B.

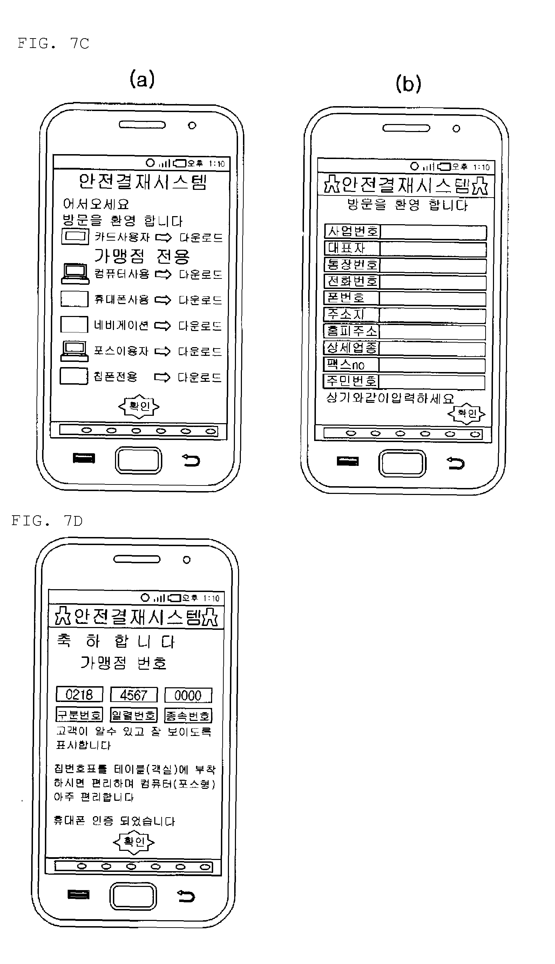

First, as shown in FIGS. 4A and 4B, if a seller accesses to the secure payments system (10) by using the payment-receiving terminal (40) (=step 131a), a screen for downloading a certain required program on the secure payment system (10) may be displayed on the phone page or on the monitor of the payment-receiving terminal (40) as shown in screen (a) of FIG. 7C.

At this time, the seller selects seller check boxes displayed on the screen of the payment-receiving terminal (40), which are correspond to a computer user, a mobile user, a navigation user, a POS user, and then he or she can get down and install any necessary program (=step 102). After having completed downloading and installing of the necessary program, a screen for entering information of the seller will be displayed on the phone page the payment-receiving terminal (40) as shown in screen (b) of FIG. 7C(=step 133). Thus, a payment system seller install process (=L6) is finished.

After having completed performing of the payment system seller install process (=L6), if the seller inputs information such as a business registration number, name of company representative, a social security number, a bank account number, a phone number, a mobile phone number, an address, a homepage address, category of business and a fax number into in screen (b) of FIG. 7C, and then he or she sends that information to the secure payment system (10) (=step 134), the secure payment system (10) recognizes the fact that information entered (=step 135) and then stores that seller's information in the information management process (11) (=step 136). Continuously the secure payment system (10) requests a registration of member store in the credit-card company and financial institution servers (30) (=step 137) and then it judges whether information required for registering the member store is received or not (=step 138). Thus, a seller authentication requesting process (=L7) is finished.

After completed having performing of the seller authentication requesting process (=L7), the credit-card company and financial institution servers (30) encode and store information of the seller, that is information of the member store transmitted from the secure payment system (10), and then it sends encoded information to the secure payment system (10) (=step 138).

When information indicating that the registration of franchise store is completed is received from the credit-card company and financial institution servers (30), a screen to enter the ID and password for accessing to the secure payment system (10) is displayed on the phone page of the payment-receiving terminal (40) of the seller (=step 139) so that the seller enters ID and password and then he or she sends related information to the secure payment system (10) (=step 140).

When the secure payment system (10) recognizes the fact that ID and password of seller entered (=step 141), it gives franchise number to the payment-receiving terminal (40) of the seller and then fulfills the authentication procedure (=step 143). Then, in the information management process (11), the secure payment system (10) extracts and stores ID, password, a franchise number, a mobile serial number, or serial numbers of the computer, PDA, POS computer of the seller, and a serial number of navigation (=step 144). As shown in screen of FIG. 7D, a screen indicating the completion of franchise store registration is displayed on the payment-receiving terminal (40) of the seller. At the same time, character information(SMS) indicating the completion of franchise store registration is sent to the payment-receiving terminal (40). Thus, a seller authentication process (=L9) is finished. Consequently, the total process for the seller registration (=90) is finished.

Wherein the reason that the secure payment system (10) extracts and store the serial number of the payment-receiving terminal (40) of the seller, or serial numbers of the computer, PDA, POS computer for the seller, and the navigation serial number while performing the information management process (11) is for preventing other people from using certain equipments other than the mobile phone (20) of the purchaser and the payment-receiving terminal so as to secure the reliability.

Herein below, the definition of the franchise number and the dependent number to be created while performing the seller registration process (90) will be described in detail.

Since the secure payment system (10) assigns the franchise number to the credit-card company and financial institution servers (30) at each different number, there are large franchise numbers of the seller. A passbook account and the financial institution to receive payment should meet each other. In order to eliminate the confusion to be caused by the multiple franchise numbers, the secure payment system (10) uses a unique integrated franchise number. When the seller accesses to the secure payment system (10) by using any device, which is capable of allowing the seller to access internet by inputting ID and password, that is the payment-receiving terminal such as a mobile phone, a computer, and PDA, he or she can ascertain a payment approval number in real time.

Meanwhile, the dependent number varies depending on the sector of the seller and it may include number of restaurant seat, number of karaoke room, number of the hotel's room, number of product selling in shopping mall and home shopping, and number of vehicles. The reason why the dependent number is created by the secure payment system (10) is to allow the seller to check the status of purchaser's trading and the settlement price of the purchaser paid.

When the purchaser directly inputs the franchise number and the dependent number into the purchaser's mobile phone (20) and then sends it to the secure payment system (10), it is necessary to obtain the dependent number so as to display information of the seller and the amount to pay. More particularly, in the franchise store using the POS computer, purchase information of the dependent number(for example, number of restaurant seat) may be entered into the POS. Wherein if the dependent number is entered into the purchaser's mobile phone (20) and then it is sent to the secure payment system (10), it is possible to certify the purchase history and the settlement price.

Herein below, the total operation of the payment-receiving terminal (40) of the seller to be proceeded in the seller registration process (90) will be described.

The secure payment system (10) according to the present invention stores information to be sent to the purchaser's mobile phone (20) and the payment-receiving terminal (40) in the credit-card company and financial institution servers (30) while performing the information management process (11). The secure payment system (10) extracts necessary information and then provides individual processes with it while performing the payment executing process (13).

Therefore, if purchaser inputs payment information into the phone page of the purchaser's mobile phone (20) and then he or she sends it to the secure payment system (10), then the secure payment system (10) stores that information in the credit-card company and financial institution servers (30) while performing the information management process (11). Then, the secure payment system (10) extracts necessary information and then provides the phone page of the mobile phone of the seller (40) with it so as to make it be inputted at real time while performing the payment executing process (13) and it sends SMS to the mobile phone of the seller (40) so as to make the seller recognize the fact that information entered. In most of the small stores, if a purchaser inputs and sends a franchise number and a settlement price, then information of the franchise store and the settlement price may be simultaneously displayed on the payment-receiving terminal (40) of the seller.

If a seller using the POS computer inputs information of a product purchased by a purchaser into the POS computer and then accesses to the phone page of the secure payment system (10) by using the purchaser's mobile phone (20), the secure payment system (10) extracts purchase information and then sends it to the phone page of the purchaser's mobile phone (20) while running the payment executing process (13). If the purchaser confirms the purchase information displayed on the phone page and then he or she sends a request for approving a payment to the secure payment system (10), the secure payment system (10) stores the purchase information while running the information management process (11).

In the payment executing process (13), the secure payment system (10) extracts necessary information and sends it to the credit-card company and financial institution servers (30). Then, payment approval details are automatically inputted into the payment-receiving terminal (40) or the home page of the POS computer and they may be sent by SMS in real time to the phone pages of the purchaser's mobile phone (20) and the payment-receiving terminal (40), and thereby the purchaser and the seller can ascertain the payment approval details, respectively.

Herein below, the secure payment method by using the mobile phone according to the present invention will be explained in detail with reference to the attached drawings FIGS. 3A, 3B, 4A and 4B, under the state that the purchaser's information and the seller's information are registered in the secure payment system (10) by using the purchaser's mobile phone (20) and the seller payment receiving terminal (40), respectively.

The secure payment method by using the mobile phone according to the present invention may be classified into three types: general credit payments, micropayments and conditional payments. Hereinafter, the process of them will be explained in detail.

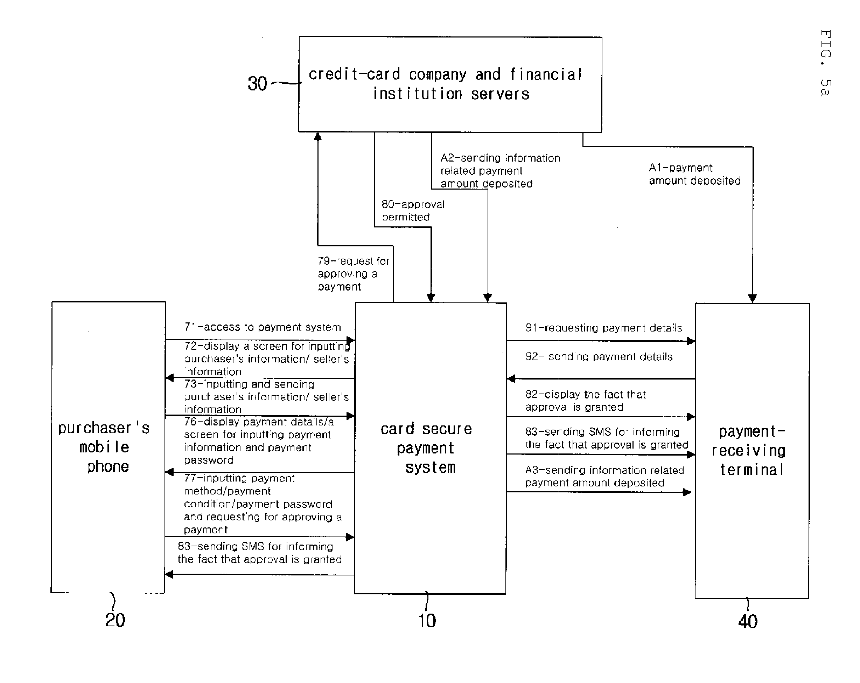

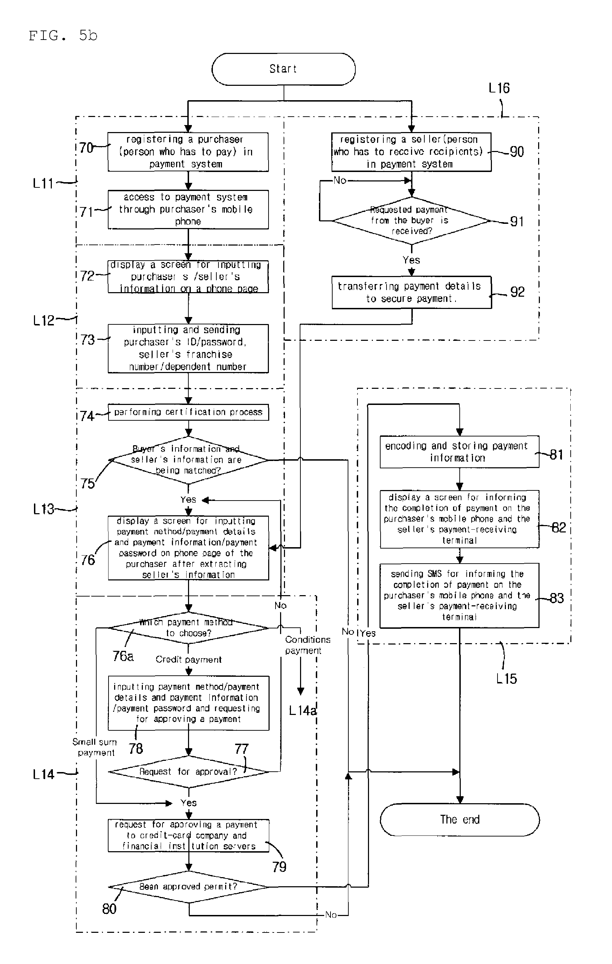

FIG. 5A is a schematic view for showing a credit payment process in the secure payment system using the mobile phone according to the present invention, and FIG. 5B is a flow chart for showing the credit payment process in the secure payment system using a mobile phone according to the present invention. Referring to FIGS. 5A and 5B, a purchaser may access to the secure payment system (10) by using the purchaser's mobile phone (20) (=step 71) so as to fulfill payments for purchases after performing the purchaser registration process (70) and the seller registration process (90) in the secure payment system (10) as shown in FIGS. 3A to 4B. Thus, a payment system connection process (=L11) is finished.

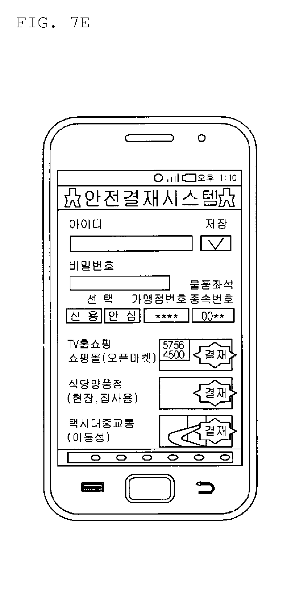

After completed having performing of the payment system connection process (=L11), a screen for requesting input of the purchaser's information(ID/password) such as the screen of FIG. 7E, the seller's information(franchise number/dependent number) and information related to the payment method is displayed on the phone page of the purchaser's mobile phone (20) (=step 72). Then, the purchaser may inputs ID and password of him or her, and also inputs the franchise number and the dependent number of the seller into the screen and thereafter he or she may send those information (=step 73). Thus, an information entering process (=L12) is finished.

After completed having performing of the information entering process (=L12), the secure payment system (10) may perform a procedure to verify the purchaser by matching ID, password, mobile serial number of the purchaser with information of the purchaser and also to verify the seller by matching the franchise number and the dependent number with information of the seller. (=step 74) while running the information management process (11).

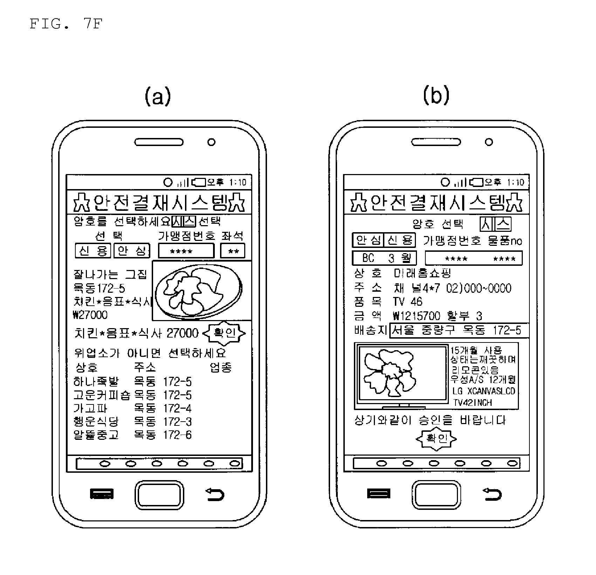

If all of information was consistent with the purchaser's information (=step 75), the secure payment system (10) extracts the franchise number and the dependent number and then makes a screen such as the screen (a) and (b) of FIG. 7F for requesting input of billing password and payment information such as goods category, commodity price, business name of the franchise store and phone number of the franchise store to be displayed on the phone page of the purchaser's mobile phone (20) as shown in screen (a) and (b) of FIG. 7F (=step 76). Thus, a purchaser verification process (=L13) is finished.

At this time, the seller inputs payment information (goods category and commodity price which are correspond to the dependent number) into the POS computer and then sends it to the secure payment system (10)(=step 92). Thus, a seller payment amount sending process (=L16) is finished. As a result, payment amounts such as contents shown in screen (a) of FIG. 7F (for showing one search result that the purchaser found stores by using the global positioning system) or screen (b) of FIG. 7F (for showing a prepared screen for making the purchaser (20) input the franchise number and the dependent number) are displayed on the phone page of the purchaser's mobile phone (20).

After completed having performing of the purchaser verification process (=L13), the purchaser may ascertain the payment details and the payment amount through the screens (a) and (b) of FIG. 7F. If the purchaser chooses "credit payments" among three kinds of method of payment in order to pay sales of purchase goods (=step 76a), then he or she inputs payment information (the type of card and the installment period) and a payment password set while performing the purchaser registration process so as to request approval (=step 78). Then the secure payment system (10) judges whether the request for approval was received or not (=step 77). If the request for approval was received, the secure payment system (10) request approval of the settlement price to the credit-card company and financial institution servers (30) (=step 79). Next, the credit-card company and financial institution servers (30) send the results of the approval of the settlement price to the secure payment system (10). Thus, a card approval process (=L14) is finished.

If the credit-card company and financial institution servers (30) rejected the request for approval of the settlement price of the purchaser, then it send the reason for the refusal to the secure payment system (10). Then, the secure payment system (10) sends the reason for the refusal to the purchaser's mobile phone (20). Thus, a card approval process using the mobile phone is finished (=L14).

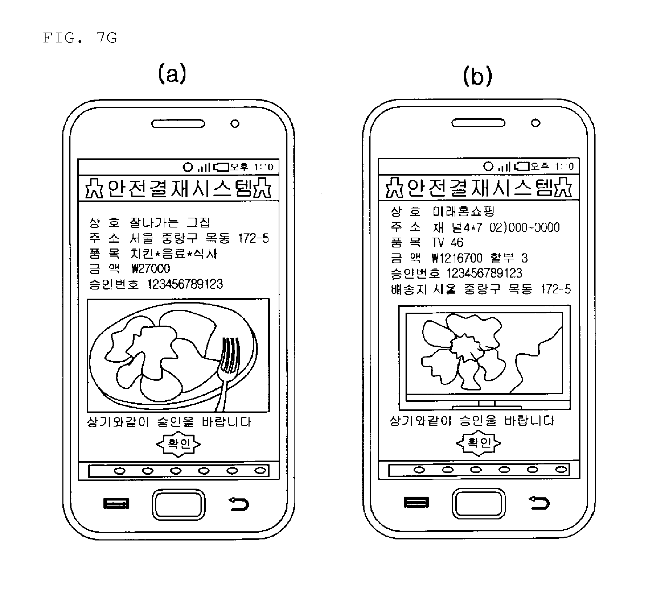

If a card authorization information is transmitted from the credit-card company and financial institution servers (30) to the secure payment system (10) after completed having performing of the card approval process (=L14), then the secure payment system (10) stores approval information after encoding it (=step 81). Continuously a screen for notifying the completion of the approval is displayed on the phone page of the purchaser's mobile phone (20) as shown in screens (a) and (b) of FIG. 7G.

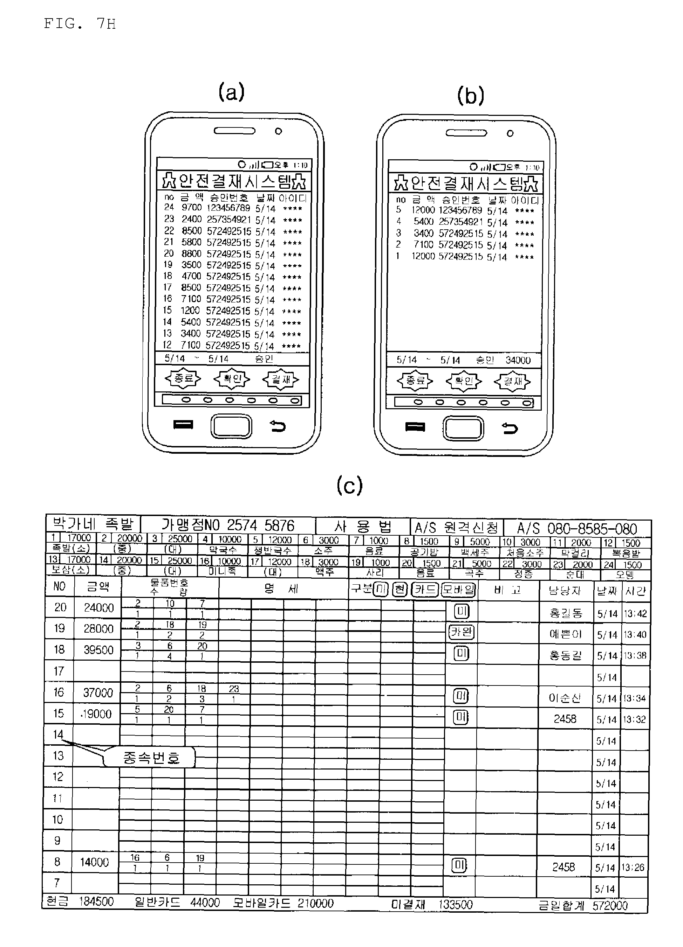

At the same time, if the credit-card company and financial institution servers (30) send the card authorization information to the secure payment system (10), it may be displayed on monitors of the payment-receiving terminal (40) of the seller or another payment-receiving terminal (for example, computer or PDA) of the seller as shown in screens (a) and (b) of FIG. 7H(in the case of POS computer's user, as screen (c) of FIG. 7H) (=step 82).

If an approval completion information is displayed on the phone pages of the purchaser's mobile phone (20) and the payment-receiving terminal (40), the secure payment system (10) sends short message service (SMS) to the purchaser's mobile phone (20) and the payment-receiving terminal (40) (=step 83). Thus, a payment completion process is finished (=L15). Consequently, the credit card payment process using the mobile phone according to the present invention is finished.

Hereinafter, the process of micropayments will be explained in detail. If the purchaser chooses "micropayments" among three kinds of method of payment (=step 76a), while running the card approval process (=L14) as described above, information (the type of card and the lump sum payment) of the card designated for a small sum corresponding to micropayments can be automatically selected without inputting payment password. Under this state, if the purchaser makes sure of the payment amount to be paid and then he or she sends it, then the micropayments gets accomplished.

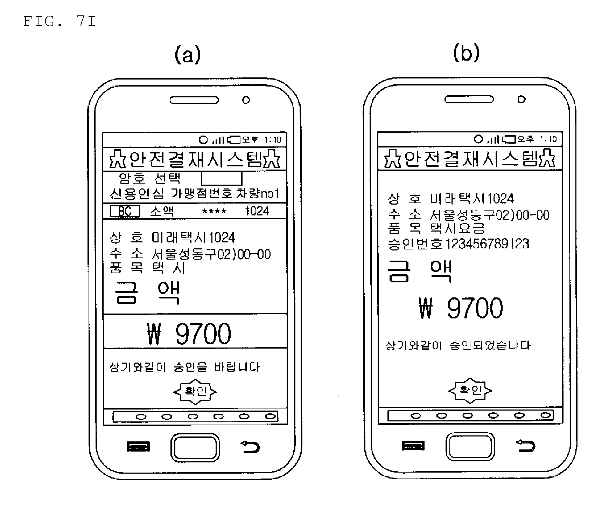

In other words, if the settle price to be paid is less than a predetermined price, characters representing the so-called " 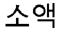 " are displayed on the phone page of the payment-receiving terminal (40) as shown in screen (a) of FIG. 7I. Then if the seller requests for approving a payment without setting payment password, the payment request is approved as shown in screen (b) of FIG. 7I and then the micropayments gets accomplished.

Hereinafter, the process of conditional payments will be explained in detail. The "conditional payments" defined by the present invention is a conditional payment such that a purchaser and a seller are willing to fulfill an appointment to pay the payment amount there between. If a purchaser buys some goods, then he or she may request to a provisional approval at first. If the purchaser reaches a satisfactory situation such as arrival of the goods, satisfaction about the quality of the goods or the service, etc., he or she may requests to a real approval by selecting characters representing the so-called " 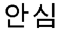 ".

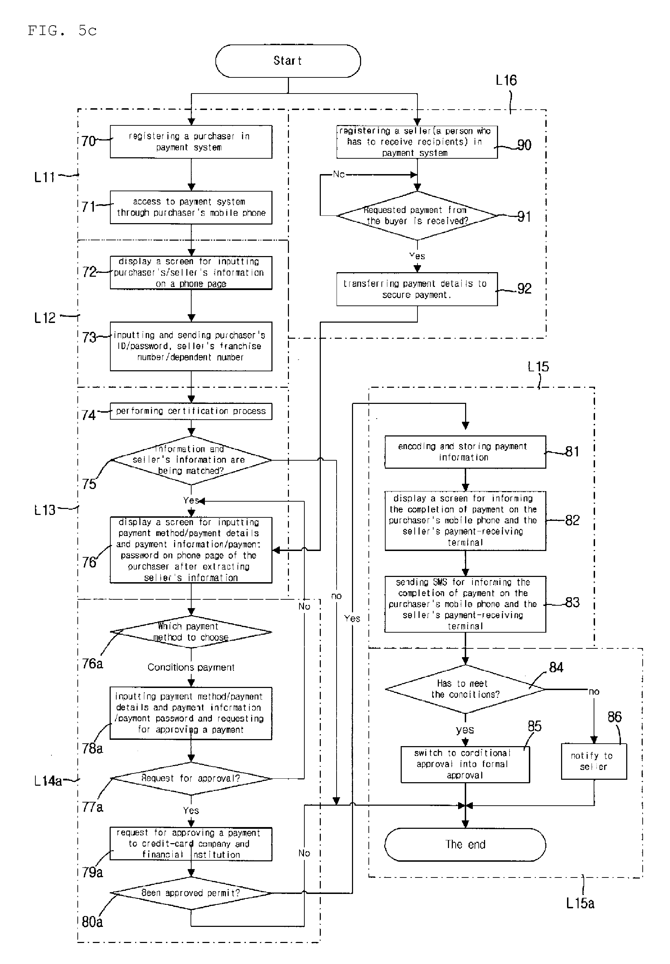

In the conditional payments, as shown in FIG. 5C, the secure payment system (10) may judge whether the purchaser sufficiently reaches a satisfactory situation such as arrival of the goods, satisfaction about the quality of the goods or the service, etc., or not after a certain period of time (may be controllable) has elapsed (=step 84). If the purchaser sufficiently satisfied, the secure payment system (10) changes the provisional approval with the formal approval (=step 85). The secure payment system (10) can postpone the formal approval or cancel the provisional approval in accordance with the responses of the purchaser and the seller (=step 86). If the secure payment system (10) did not receive any response from the purchaser or the seller, it can automatically approve the conditional payment after a certain period of time has elapsed. Thus, a conditional approval process (=L15a) is finished. This leads to the elimination of negative sales activities and the full satisfaction of payment conditions capable of making purchasers to buy goods with confidence.

As described above, if a purchaser wants to perform a payment executing process by selecting any one payment method among the credit payments, the micropayments, and the conditional payments in a franchise store which does not have any dependent number, he or she cannot ascertain the payment amount. In this case, the purchaser first need to check the payment amount from the seller and thereafter he or she may directly input the payment amount into a phone page of the purchaser's mobile phone so as to request for approving a payment.

In the meantime, when the purchaser performs a payment executing process by selecting any one payment method among the credit payments, the micropayments, and the conditional payments, he or she can ascertain the payment amount by inputting the franchise number and the dependent number of the seller into the phone page of the purchaser's mobile phone (20). Alternatively, the purchaser can easily find the franchise number of the seller by using the positional information process (16) so as to eliminate the need to enter the franchise number directly.

If a purchaser accesses to the secure payment system (10) through the purchaser's mobile phone (20), the payment-receiving terminal (40) and the purchaser's mobile phone (20) will be placed in the same coordinate position. In general, the location of the franchise store, that is the seller, is constant and the location of the purchaser's mobile phone (20) may be changed in accordance with the movement of the purchaser. If the purchaser searches information for a dealer to sell the product he or she is going to buy by using the purchaser's mobile phone (20), then the secure payment system (10) may perceive a coordinate position of the purchaser's mobile phone (20) while running the positional information process (16). Continuously, the secure payment system (10) compares the perceived positional coordinates with same area positional coordinates by matching them together and thereafter it allows the phone page of the purchaser's mobile phone (20) to display a plurality of franchise store existing in a region within a predetermined radius as shown in screen (a) of FIG. 7F. If the purchaser selects any one franchise store among the plurality of franchise stores shown in the screen, the franchise number may be automatically inputted into the phone page of the purchaser's mobile phone (20) while running the information management process (11) and customer management process (12). As a result, it is possible to ascertain and to input information of the franchise store.

As described above, when the purchaser performs a payment executing process by selecting any one payment method among the credit payments, the micropayments, and the conditional payments, he or she can ascertain the payment amount by inputting the franchise number and the dependent number of the seller into the phone page of the purchaser's mobile phone (20). However, it is convenient to enter both of the franchise number and the dependent number of the seller into the phone page of the purchaser's mobile phone (20). In order to eliminate this problem, a franchise store information chip which is a near-field communication chip and contains information of the seller including franchise number and the dependent number may be fixed and installed on a table of the franchise store.

Also, a payment information recognition chip capable of automatically ascertain the payment information by reading the seller's information including franchise number and the dependent number after performing the near- field communication with the franchise store information chip may be directly installed in the purchaser's mobile phone(20) or be installed thereto with the aid of any secondary storage tool.

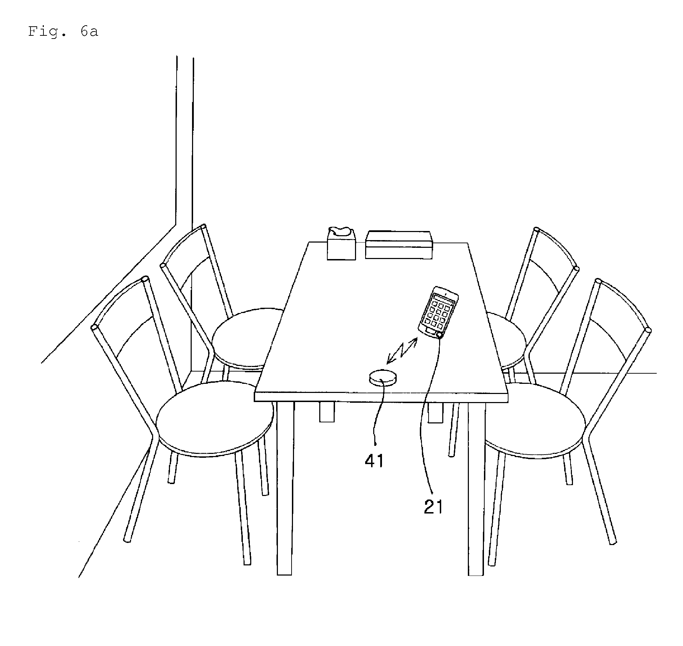

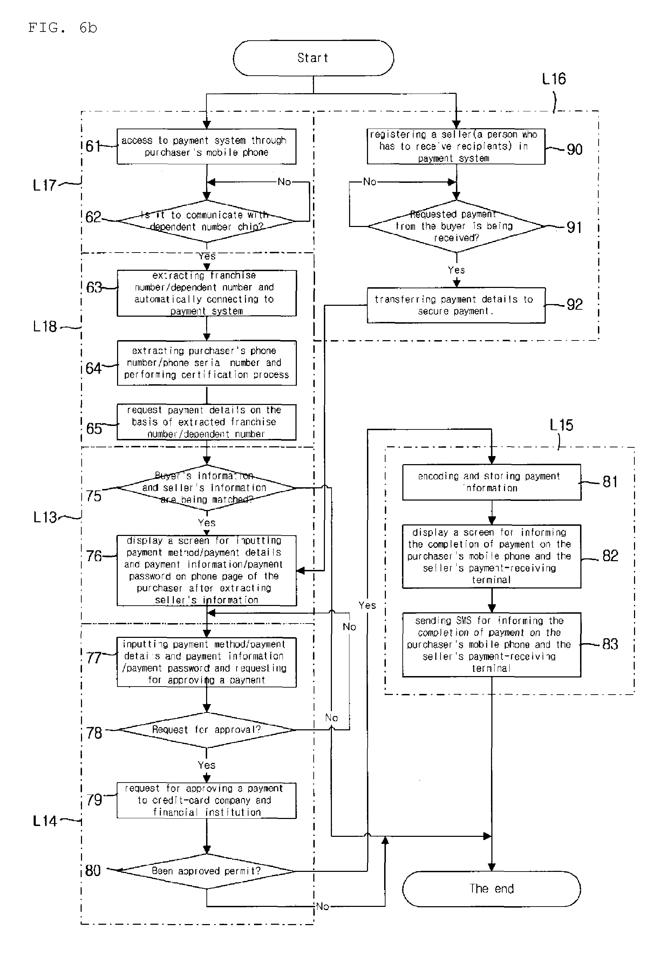

FIG. 6A illustrates an example for showing near field communications between a franchise store information chip (41) located on a table of a franchise store and a mobile phone (20) having a payment information recognition chip (21) therein in the secure payment system using the mobile phone according to the present invention. FIG. 6B is a flow chart for showing a payment process of the secure payment system using the mobile phone according to the present invention when the mobile phone having payment information recognition chip (21) therein and the franchise store information chip (41) located on the table of the franchise store as shown in FIG. 6A are close to each other.

At first, as shown in FIG. 6A, if a purchaser accesses his or her mobile phone (20) having the payment information recognition chip (21) therein to the table in the seller franchise store on which the franchise store information chip (41) is installed in a state that the purchaser's mobile phone (20) is connected with the secure payment system (10)(=step 61), then the payment information recognition chip (21) is communicated with the franchise store information chip (41) in close proximity to each other. At this time, the micro process unit(MPU) of the purchaser's mobile phone (20) may perform a close communication process (=L17), as shown in FIG. 6B, which can recognize a close communication between the payment information recognition chip (21) and the franchise store information chip (41).

After completed having performing of the close communication process (=L17), the secure payment system (10) extracts the franchise number and the dependent number of the seller stored in the franchise store information chip (41). Continuously the secure payment system (10) request for approving a payment amount which is corresponds to the franchise number and the dependent number so that an automatic connection and certification process (=L18) is finished.

After completed having performing of the automatic connection and certification process (=L18), the card approval process (=L14), the payment completion process (=L15) and the seller payment amount sending process (=L16) will be further performed in the same way as those of the credit payment method as described above in FIG. 5.

As described above, if the purchaser makes the purchaser's mobile phone (20) having the payment information recognition chip (21) access to the franchise store table of the seller on which the franchise store information chip (41) is installed, the purchaser's mobile phone (20) can be automatically connected with the secure payment system (10). Then, the purchaser can automatically perceive the franchise number and the dependent number of the seller so that he or she can confirm payment details. As a result, it is possible to relieve discomfort that the seller must enter the franchise number and the dependent number of the seller while performing the credit payments in the secure payments system (10). This leads to enhancement of the functionality of the card payments system.

In order to automatically connect with the secure payment system (10) while the purchaser's mobile phone (20) having the payment information recognition chip (21) accesses to the franchise store table of the seller on which the franchise store information chip (41), the payment information recognition chip (21) must be already stored in the purchaser's mobile phone (20) when the product to be shipped. If not, in the case of already used mobile phone, the payment information recognition chip (21) must be installed therein at first and then the user shall use the mobile phone after downloading any related program.

The franchise store information chip (41) may be covered by a cover made of plastic material and it can be replaced with a new franchise store information chip during the failure or the breakage.

### Industrial Applicability

The present invention relates to a secure payment system, wherein a purchaser accesses a payment system using the mobile phone having a card registered therein and inputs and transmits seller information, a payment, and a password; a payment system recognizes and stores the inputs and extracts necessary information with a view to transmitting same to a credit-card company and a financial institution; and, if approval is granted by the credit-card company and financial institution, an approval number is automatically inputted in a process list of the payment system, and then a short message service (SMS) is simultaneously provided to the mobile phones of the purchaser and of the seller and to a payment-receiving terminal of the seller for payment confirmation.

## Claims

1. A secure payment system (10) of the type having a mobile phone (20) of a user who has to pay for his or her purchase; credit-card company and financial institution servers (30) which are configured to maintain an account of available credit for the user of the mobile phone (20), and for generating an authorization to issue credit upon request if there is available credit in the account associated with the mobile phone (20) equal to or greater than the requested credit; and a payment-receiving terminal (40) configured to receive authorization to issue credit in real time, in which the secure payment system (10) serves as a go-between in transmission of all information among the purchaser's mobile phone (20), the credit-card company and financial institution servers (30), and the payment-receiving terminal (40); provides the purchaser's mobile phone (20) and the payment-receiving terminal (40) with a screen required for payments, respectively; and encodes and stores all information required for payments, wherein the improvement comprises:
the secure payment system (10) stores and administrates information of the purchaser to be inputted through the purchaser's mobile phone (20), information of a seller to be inputted through the payment-receiving terminal (40), device information of the purchaser's mobile phone (20) and the payment-receiving terminal (40), and password information of the purchaser and the seller, while running an information management process (11);
the secure payment system (10) makes seller's product information to be outputted on a phone page of the purchaser's mobile phone (20) when the purchaser's mobile phone (20) accesses to the secure payment system (10) on the basis of the seller's information of the payment-receiving terminal (40), while running a customer management process (12);
the secure payment system (10) extracts card information such as card number and expiration date from the information management process (11) according to a request for approving a payment transmitted from the purchaser's mobile phone (20), and then sends that information to the credit-card company and the financial institution servers (30), and then receives authorization to issue credit and stores it, and then inputs a payment approval number into process lines of a phone and home page process (15) and a SMS sending process (14), while running the payment executing process (13);
the secure payment system (10) automatically sends the purchaser's information and the seller's information to the purchaser's mobile phone (20) and the payment-receiving terminal (40) with a character, while running the SMS sending process (14);
the secure payment system (10) outputs payment fulfill circumstances such as required information, purchases, payment amount and so on to the phone page or the home page, while a payment is executed in the secure payment system (10) by using the purchaser's mobile phone (20) and the payment-receiving terminal (40), in the phone and home page process (15);
the secure payment system (10) perceives positional coordinates of the purchaser's mobile phone (20) when the purchaser's mobile phone (20) accesses to the secure payment system (10), and then it compares the perceived positional coordinates with same area positional coordinates by matching them together, and thereafter it makes the phone page of the purchaser's mobile phone (20) display a plurality of franchise stores existing in a region within a predetermined radius, while running the positional information process (16);
the secure payment system (10) makes all of information to be sent or received among the purchaser's mobile phone (20), the credit-card company and the financial institution servers (30) and the payment-receiving terminal (40) through the public telecommunication network of the mobile and the internet, while running a data sending process (17); and
a franchise number, that is the seller's information, comprises a state identification number 3-digit, a local identification number 4-digit and a personal identification number 4-digit so that the secure payment system (10) perceives the purchaser's mobile phone (20) and the franchise number of the seller and then it shall fulfill payments for purchases.

2. The secure payment system (10) as claimed in claim 1, **characterized in that** a franchise store information chip (41) of which a franchise number and a dependent number are stored therein is installed a predetermined position in a franchise store of the seller registered in the secure payment system (10), wherein a payment information recognition chip (21) is installed in the purchaser's mobile phone (20) so that it may be communicated with the franchise store information chip (41) in close proximity to each other and it can read information related to the franchise number and the dependent number of the seller.

3. A payment method by using a secure payment system of the type having a mobile phone of a user who has to pay for his or her purchase; credit-card company and financial institution servers which are configured to maintain an account of available credit for the user of the mobile phone, and for generating an authorization to issue credit upon request if there is available credit in the account associated with the mobile phone equal to or greater than the requested credit; and a payment-receiving terminal configured to receive authorization to issue credit in real time; in which the secure payment system serves as a go-between in transmission of all information among the purchaser's mobile phone, the credit-card company and financial institution servers, and the payment-receiving terminal; provides the purchaser's mobile phone and the payment-receiving terminal with a screen required for payments, respectively; and encodes and stores all information required for payments, **characterized in that** it comprises the steps of:
performing a purchaser registration process (70) a purchaser so as to obtain an approval to be granted by the credit-card company and financial institution servers when the purchaser's mobile phone accesses to the secure payment system, wherein the purchaser registration process (70) comprises the steps of :
(a) performing a purchaser's mobile card install process (=L1), wherein if a user accesses to the payment system by using the purchaser's mobile phone and then he or she gets down a program required to the secure payment system, a screen for entering a card information and a personal information of the purchaser in the secure payment system may be displayed on the phone page of the purchaser's mobile phone;
(b) performing a purchaser's mobile card certification request process (=L2), wherein after completed having performing of the purchaser's mobile card install process (=L1), if a purchaser inputs card information and purchaser's information, then the secure payment system receives that information and requests the registration of the purchaser's mobile phone and the purchaser's mobile card to the credit-card company and financial institution servers;
(c) performing a purchaser's mobile card temporary authorization process (=L3) the purchaser's mobile card, wherein after completed having performing of the purchaser's mobile card identification request process (=L2), if the secure payment system receives information related to the completion of the card registration from the credit-card company and financial institution servers, it performs a temporary authentication step and stores that information;
(d) performing a purchaser's mobile card authorization preparing process (=L4) the purchaser's mobile card authorization after completed having performing of purchaser's mobile card temporary authorization process (=L3), wherein a screen for entering a password to be used when billing and an emergency password to be used in the event of an emergency is displayed on the phone page of the purchaser's mobile phone; and
(e) performing a purchaser's mobile card final authorization process (=L5), wherein after completed having performing of purchaser's mobile card authorization preparing process (=L4), if the purchaser inputs the password to be used when billing into the screen and then sends that information to the secure payment system, the secure payment system makes a simulated payment fulfill screen to be displayed on the phone page of the purchaser's mobile phone, and if the simulated payments was properly made, then the secure payment system stores information related to the connection and payment password and thereafter performs the final certification procedure, and then the secure payment system sends character information to purchaser's mobile phone so as to notify the completion of the purchaser registration procedure;
performing a seller registration process (90) so as to obtain an approval to be granted by the credit-card company and financial institution servers when the purchaser's mobile phone accesses to the secure payment system, wherein the seller registration process (90) comprises the steps of :
(a) performing a payment system seller install process (=L6), wherein a seller can access to the secure payment system through the payment-receiving terminal and download and install any necessary program, and wherein a screen for entering information of the seller may be displayed on the phone page the payment-receiving terminal;
(b) performing a seller authentication requesting process (=L7), wherein after having completed performing of the payment system seller install process (=L6), if the seller inputs seller's information of the payment-receiving terminal, the secure payment system recognizes the fact that information entered and then stores that seller's information, and then the secure payment system requests a registration of member store in the credit-card company and financial institution servers; and
(c) performing a seller authentication process (=L9), wherein after completed having performing of the seller authentication requesting process (=L7), if the secure payment system receives information indicating that the registration of franchise store is completed, then the seller enters information of the payment-receiving terminal and sends that information to the secure payment system, then the secure payment system recognizes the fact that information entered and it gives franchise number to the payment-receiving terminal of the seller and then fulfills the final authentication procedure, at the same time, it sends character information(SMS) indicating the completion of franchise store registration to the payment-receiving terminal;
performing a payment system connection process (=L11) to a home page of the secure payment system by using the purchaser's mobile phone so as to fulfill payments for purchases after completing the purchaser registration process (70) and the seller registration process (90);
performing an information entering process (=L12), wherein after completed having performing of the payment system connection process (=L11), a screen for requesting input of the purchaser's information, the seller's information and information related to the payment method is displayed on the phone page of the purchaser's mobile phone, then the purchaser sends those information;
performing a purchaser verification process (=L13), wherein after completed having performing of the information entering process (=L12), the secure payment system compares and analyzes the purchaser's information and the seller goods information, and if all of information was consistent with the purchaser's information, the secure payment system makes a screen for requesting input of billing password and payment details to be displayed on the phone page of the purchaser's mobile phone;
performing a card approval process (=L14), wherein after completed having performing of the purchaser verification process (=L13), the purchaser inputs a payment method, payment information and a payment password so as to request for approving a payment, then the secure payment system judges whether the request for approval was received or not, if the request for approval was received, the secure payment system request approval of the settlement price to the credit-card company and financial institution servers after extracting and coding the payment information, the card number of the purchaser, and the expiration date of the card, and then the credit-card company and financial institution servers send the results of the approval of the settlement price to the secure payment system; and
performing a payment completion process (=L15), wherein after completed having performing of the card approval process (=L14), if a card authorization information is transmitted from the credit-card company and financial institution servers to the secure payment system, then the secure payment system automatically inputs and stores in process lists of the information management process, the customer management process, the payment executing process, the SMA sending process, the phone and home page process, the positional information process, the data transfer process;
wherein the dependent number may be selected from the group of number of restaurant seat, number of karaoke room, number of the hotel's room, number of product selling in shopping mall and home shopping, and number of vehicles;
wherein the secure payment system can make the phone page of the purchaser's mobile phone display a plurality of franchise stores existing in a region within a predetermined radius due to the positional information process, while running payment system connection process (=L11);
and wherein a franchise number, that is the seller's information, comprises a state identification number 3-digit, a local identification number 4-digit and a personal identification number 4-digit.

4. A payment method by using a secure payment system of the type having a mobile phone of a user who has to pay for his or her purchase; credit-card company and financial institution servers which are configured to maintain an account of available credit for the user of the mobile phone, and for generating an authorization to issue credit upon request if there is available credit in the account associated with the mobile phone equal to or greater than the requested credit; a payment-receiving terminal configured to receive authorization to issue credit in real time; a franchise store information chip having a franchise number and a dependent number, which is located on a table of a franchise store; and a payment information recognition chip installed in the purchaser's mobile phone, which can read the seller's information after performing the near- field communication with the franchise store information chip; in which the secure payment system serves as a go-between in transmission of all information among the purchaser's mobile phone, the credit-card company and financial institution servers, and the payment-receiving terminal; provides the purchaser's mobile phone and the payment-receiving terminal with a screen required for payments, respectively; **characterized in that** it comprises the steps of:
performing a close communication (=L17), wherein when a purchaser accesses to the secure payment system through the purchaser's mobile phone, the secure payment system can recognize a close communication between the payment information recognition chip and the franchise store information chip; and
performing an automatic connection and certification (=L18), wherein after completed having performing of the close communication process (=L17), the secure payment system extracts the franchise number and the dependent number of the seller stored in the franchise store information chip, then it allows the seller's information, which is corresponds to the franchise number and the dependent number, to be displayed on a phone page of the purchaser's mobile phone, and then it requests for approving a payment;
wherein after completed having performing of the automatic connection and certification process (=L18), the card approval process (=L14), the payment completion process (=L15) and the seller payment amount sending process (=L16) may be further performed in sequence,
wherein a franchise number, that is the seller's information, comprises a state identification number 3-digit, a local identification number 4-digit and a personal identification number 4-digit,
and wherein the dependent number may be selected from the group of number of restaurant seat, number of karaoke room, number of the hotel's room, number of product selling in shopping mall and home shopping, and number of vehicles.
